# FASCICULE DE BREVET EUROPEEN

(11) **EP 3 443 396 B1**
(45) Date de publication et mention de la délivrance du brevet: **17.08.2022**
(21) Numéro de dépôt: 17716872.1
(22) Date de dépôt: 10.04.2017
(51) Int. Cl.: G02B 6/38

(54) **CONNECTEUR OPTIQUE ET ÉLÉMENT CONTACTEUR POUR CONNECTEUR OPTIQUE**
OPTISCHER STECKVERBINDER UND KONTAKTIERUNGSELEMENT FÜR DEN OPTISCHEN STECKVERBINDER
OPTICAL CONNECTOR AND CONTACTING ELEMENT FOR AN OPTICAL CONNECTOR

(30) Priorité: 14.04.2016 FR 1653311
(43) Date de publication de la demande: 20.02.2019
(73) Titulaire: Lémo S.A., 1024 Ecublens (CH)
(72) Inventeur: PATENAUDE, Alexandre, 74200 Thonon-les-Bains (FR)
(74) Mandataire: reuteler & cie SA
(86) Numéro de dépôt international: PCT/EP2017/058587
(87) Numéro de publication internationale: WO 2017/178445

(56) Documents cités:
- EP-A1- 1 074 867
- EP-A1- 2 793 063
- EP-A2- 1 251 374
- EP-B1- 2 793 063
- US-A- 5 608 828
- US-A1- 2002 186 934
- US-A1- 2009 060 420
- US-A1- 2016 018 602

## Description

### DOMAINE TECHNIQUE DE L'INVENTION

La présente invention concerne le domaine de connecteurs à fibres optiques.. L'invention porte en particulier sur un élément contacteur pour un connecteur à fibre optique.

### ETAT DE LA TECHNIQUE ANTERIEURE

Un connecteur à férule pour fibre optique comprend généralement une embase et une fiche contenant un ou plusieurs éléments contacteurs, également appelés contacts optique dans le jargon technique. Chaque élément contacteur comprend une férule au sein de laquelle une partie dénudée d'une fibre optique peut être insérée. Or, lors de l'assemblage de l'embase et de la fiche d'un connecteur à férule, il est primordial que la ou les férules portées par le ou les éléments contacteurs disposés dans l'embase du connecteur soient parfaitement alignées avec les férules portées par les éléments contacteurs disposées dans la fiche du connecteur.

Pour assurer un alignement optimal, on utilise généralement un dispositif d'alignement, ou tube d'alignement, qui se présente sous la forme d'un tube, creux au moins à chacune de ses extrémités, et présentant une surface interne de forme appropriée pour que les extrémités du tube d'alignement puissent être couplées avec les extrémités des éléments contacteurs. Ainsi, lors de l'assemblage de la fiche et de l'embase d'un connecteur pour fibre optique, un tube d'alignement est couplé avec chaque élément contacteur d'une partie du connecteur, l'embase ou la fiche, pour, au moment de l'assemblage de la fiche avec de l'embase, se coupler avec le ou les éléments contacteurs de l'autre partie du connecteur et assurer ainsi un alignement optimal des férules de l'embase avec les férules de la fiche.

Pour pouvoir coupler un tube d'alignement avec un élément contacteur, les éléments contacteurs utilisés dans les connecteurs pour fibre optique sont généralement munis d'un fourreau, parfois en matière plastique, dont une extrémité est adaptée pour coopérer avec la surface interne d'une extrémité d'un tube d'alignement. Le fourreau est disposé pour entourer la férule de l'élément contacteur en étant généralement rendu solidaire de l'élément contacteur par collage à chaud.

Or, la construction et l'assemblage de tels éléments contacteurs munis d'un fourreau en plastique, implique des couts de production et d'assemblage significatifs.

Divers connecteurs pour fibres optiques faisant partie de l'arrière-plan technique sont connus de US2016/0018602, US5608828, EP1251374, et US2002/186934.

US5608858 décrit un élément contacteur pour un connecteur pour fibre optique, comprenant une pièce avant, au sein de laquelle une seule férule est logée et fixée, une pièce arrière, un ressort et un tube d'alignement, la pièce arrière étant conformée pour permettre le passage en son sein d'une fibre optique, les pièces avant et arrière montées de sorte que le ressort pousse la pièce avant et la pièce arrière en sens opposés. US2002/166934 décrit en outre qu'un ressort est logé au sein de la pièce arrière, mais un jeu subsiste alors entre le tube d'alignement et la pièce avant quand ils sont couplés ensemble.

### EXPOSÉ DE L'INVENTION

L'invention vise à pallier à ces inconvénients. En particulier, l'invention a pour objectif de fournir un élément contacteur pour un connecteur à fibre optique qui, tout en permettant d'assurer l'alignement des férules au moment de l'assemblage de l'embase et de la fiche du connecteur, est moins onéreux à produire et à assembler.

L'invention vise en outre à simplifier le procédé d'assemblage d'un connecteur à fibre optique, notamment de l'élément contacteur avec une fibre optique.

Des buts de l'invention sont atteints par un élément contacteur pour un connecteur pour fibre optique selon la revendication 1 et par un connecteur pour fibres optiques selon la revendication 7.

Dans la présente, on décrit un élément contacteur pour un connecteur pour fibre optique, comprenant une pièce avant, au sein de laquelle une seule férule est logée et fixée, une pièce arrière, au sein de laquelle un ressort est logé, et un tube d'alignement. La pièce arrière est conformée pour permettre le passage en son sein d'une fibre optique. La pièce avant est fixée de manière amovible à la pièce arrière, la pièce avant étant conformée pour s'insérer au moins partiellement au sein de la pièce arrière de sorte à ce que le ressort pousse la pièce avant et la pièce arrière en sens opposés. La pièce avant est munie d'une partie de verrouillage conformée de sorte à permettre un couplage de position fixe mais séparable avec une extrémité du tube d'alignement.

Dans une forme d'exécution, la partie de verrouillage comprend une rainure ou protubérance s'étendant sur le pourtour de ladite pièce avant, interrompue par au moins une fente longitudinale afin de conférer une certaine élasticité à la partie de verrouillage.

Dans une forme d'exécution, la rainure est adjacente à une lèvre faisant saillie par rapport à ladite rainure.

Dans une forme d'exécution, la pièce arrière présente une gorge, le fond de ladite gorge présentant au moins une surface anti-rotation.

Dans une forme d'exécution, la pièce avant est au moins partiellement insérée dans la pièce arrière, le ressort étant disposé à l'intérieur de la pièce arrière en compression contre une extrémité arrière de la pièce avant.

Dans une forme d'exécution, la pièce arrière comprend au moins une griffe qui coopère avec une cale formée dans la pièce avant pour tenir la pièce avant solidaire de la pièce arrière.

Dans la présente, on décrit aussi un connecteur pour fibre optique comprenant un boîtier et au moins un élément contacteur monté dans le boitier.

Dans une forme d'exécution, le connecteur peut aussi comprendre une ou plusieurs bornes électriques.

Dans une forme d'exécution, le connecteur comprend une pluralité desdits éléments contacteurs.

Dans une forme d'exécution, le boitier comprend un corps supportant la pluralité desdits éléments contacteurs et ladite bornes électrique si présent, et une enveloppe assemblée au corps.

Dans une forme d'exécution, le boitier comprend un corps du support comprenant des logements supportant et positionnant les éléments contacteurs dans le boitier. Chaque logement comprend une fente latérale permettant une insertion latérale de chaque élément contacteur dans son logement respectif. La fente latérale peut -être munie d'une guide anti-rotation coopérant avec une surface anti-rotation de l'élément contacteur afin de bloquer la rotation de celui-ci lorsqu'il est inséré dans le corps de support.

Dans une forme d'exécution, le corps du support peut comprendre un rail qui est inséré dans une gorge de la pièce arrière pour bloquer la position axiale de la pièce arrière par rapport au boîtier.

D'autres caractéristiques et avantages de l'invention ressortiront à la lecture de la description qui suit, en référence aux figures annexées.

### BRÊVE DESCRIPTION DES FIGURES

la figure 1 est une vue en perspective, en éclatée partielle, d'un élément contacteur selon l'invention ;
la figure 2A est une vue en perspective d'un élément contacteur et d'un tube d'alignement avant couplage, selon une forme d'exécution de l'invention;
la figure 2B, une vue en perspective d'un élément contacteur et d'un tube d'alignement couplés, selon une forme d'exécution de l'invention;
la figure 2C est une vue en coupe de l'élément contacteur et du tube d'alignement illustrés dans la figure 2A ;
la figure 3A est une vue en perspective d'éléments contacteurs assemblés dans un corps de support d'un boitier d'un connecteur optique selon une forme d'exécution de l'invention ;
la figure 3B est une vue similaire à la figure 3A avant assemblage des éléments contacteurs dans le corps de support ;
la figure 4A est une vue en perspective d'un connecteur optique selon une forme d'exécution de l'invention couplé à un connecteur optique complémentaire;
la figure 4B est une vue d'une extrémité axiale du connecteur de la figure 4A ;
la figure 4C est une vue en coupe selon la ligne IVc-IVc de la figure 4B ;
la figure 5A est une vue en perspective d'un connecteur optique selon une autre forme d'exécution de l'invention;
la figure 5B est une vue d'une extrémité axiale du connecteur de la figure 5A ;
la figure 5C est une vue en coupe selon la ligne Vc-Vc de la figure 5B.

### DESCRIPTION DÉTAILLÉE DE L'INVENTION

Faisant référence aux figures, un élément contacteur 1 pour un connecteur à férule pour fibre optique selon une forme d'exécution de l'invention est destiné à être utilisé au sein d'un connecteur 14, 14' pour fibre optique, et ce que le connecteur soit une embase (connecteur femelle) ou une fiche (connecteur mâle).

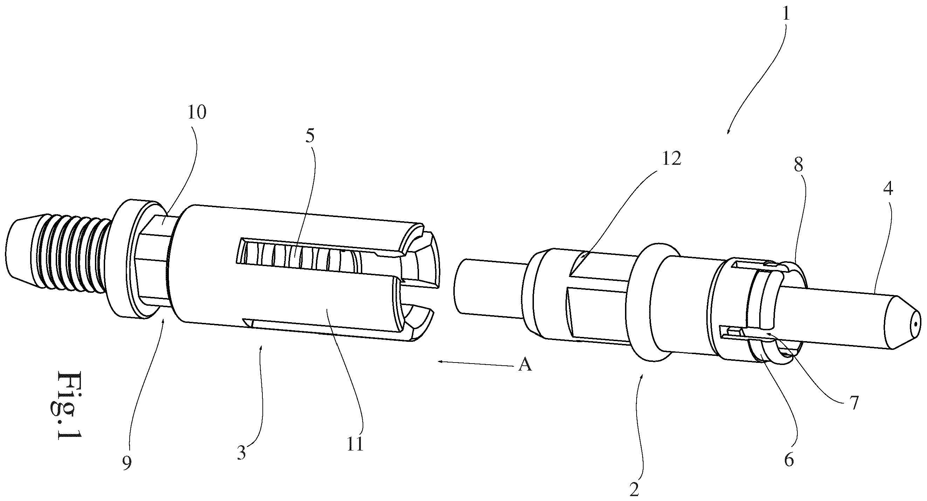

L'élément contacteur 1 comprend une pièce avant 2 et d'une pièce arrière 3. Bien que montrée séparément de la pièce arrière 3 sur la figure 1, l'homme du métier comprend que la pièce avant 2 de l'élément contacteur 1 s'insère, en se déplaçant dans le sens de la flèche A, au sein de la pièce arrière 3 pour y être fixée par des moyens de connexion tels que décrits ci-dessous. Comme l'homme du métier l'entrevoit, l'élément contacteur selon l'invention est adapté pour qu'une fibre optique puisse être insérée au sein de la pièce arrière 3 et qu'une partie dénudée de la fibre trouve place au sein de la férule 4.

Au sein de la pièce avant 2 de l'élément contacteur 1 est logée une férule 4. La férule 4 fait saillie vis-à-vis de l'extrémité avant de la pièce avant 2 de l'élément contacteur 1. L'extrémité avant de la pièce avant 2 comprend une partie de verrouillage 6, 7, 8. Dans la forme d'exécution illustrée, la partie de verrouillage est configurée pour une connexion par déformation élastique avec un tube d'alignement 13. Dans une forme d'exécution, la partie de verrouillage comprend au moins une rainure 6 qui s'étend sur le pourtour de la pièce avant 2. La rainure 6 est interrompue par au moins une fente longitudinale 7 et est adjacente à une lèvre 8 qui fait saillie par rapport à la rainure 6. Alternativement, dans une variante, la partie de verrouillage comprend au moins une protubérance qui s'étend sur le pourtour de la pièce avant 2, la protubérance étant interrompue par au moins une fente longitudinale 7.

La rainure 6, la ou les fentes longitudinales 7 et la lèvre 8 sont conformées pour permettre le couplage élastique de la pièce avant 2 avec une extrémité d'un tube d'alignement 13. Pour cela, le tube d'alignement 13 présente une extrémité creuse dont la surface interne présente une forme conjuguée à la partie de verrouillage 6, 8, à savoir la forme de l'ensemble comprenant la rainure 6 et la lèvre 8 dans l'exemple illustré. Ainsi, une fois insérée dans le tube d'alignement, la pièce avant 2 y reste fixée tant qu'une force visant à séparer la pièce avant 2 du tube d'alignement n'est pas appliquée. L'insertion de la pièce avant 2 au sein d'un tube d'alignement est en outre facilitée par la présence de la ou des fentes longitudinales 7 qui confèrent une souplesse élastique à l'extrémité avant de la pièce avant 2 afin de permettre une légère déformation qui facilite le couplage et le découplage de la pièce avant 2 avec le tube d'alignement.

Selon un mode de réalisation alternatif, la rainure 6 peut être remplacée par une ou plusieurs protubérances disposées ou s'étendant sur le pourtour de la pièce avant 2. Bien que la figure 1 présentent trois fente longitudinales 7, la pièce avant 2 peut comprendre plus de trois ou moins de trois fentes longitudinales.

L'extrémité arrière de la pièce avant 2 présente par ailleurs au moins une cale 12 qui est destinée à coopérer avec des éléments de la pièce arrière 3 de l'élément contacteur pour fixer ensemble la pièce avant 2 et la pièce arrière 3 lorsque, en configuration d'utilisation normale, l'extrémité arrière de la pièce avant 2 est partiellement insérée au sein de la pièce arrière 3. Bien que la figure 1 montre deux cales 12, l'extrémité arrière de la pièce avant peut comprendre plus ou moins de deux cales 12.

Au sein de la pièce arrière 3 est logé un ressort 5 qui se comprime lorsque la pièce avant 2 est insérée au sein de la pièce arrière 3, la pièce avant 2 et la pièce arrière 3 étant amovibles l'une par rapport à l'autre contre le biais du ressort. Pour fixer la pièce avant 2 à la pièce arrière 3, la pièce arrière comprends au moins une griffe 11 adaptée pour s'écarter lors de l'insertion de la pièce avant dans la pièce arrière, et pour se bloquer contre la cale 12 de la pièce avant 2 sous la poussée du ressort.

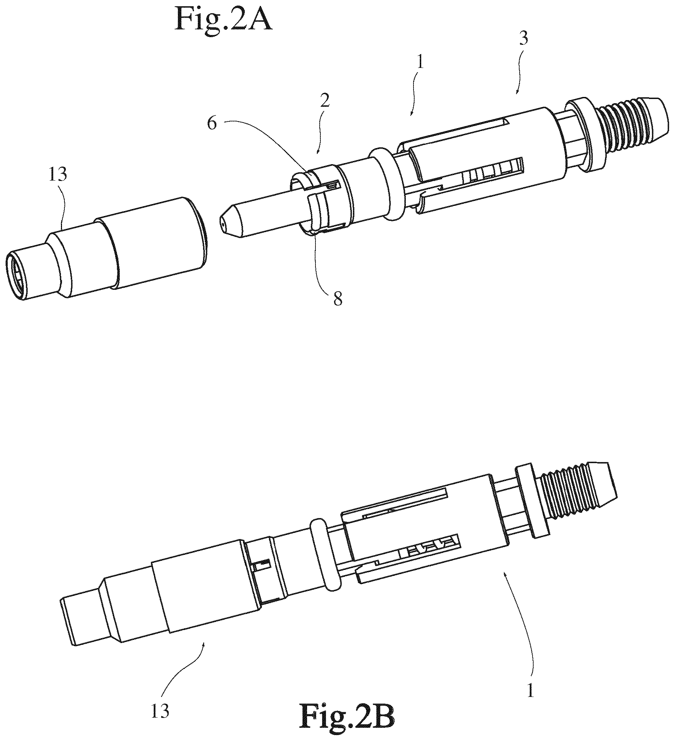

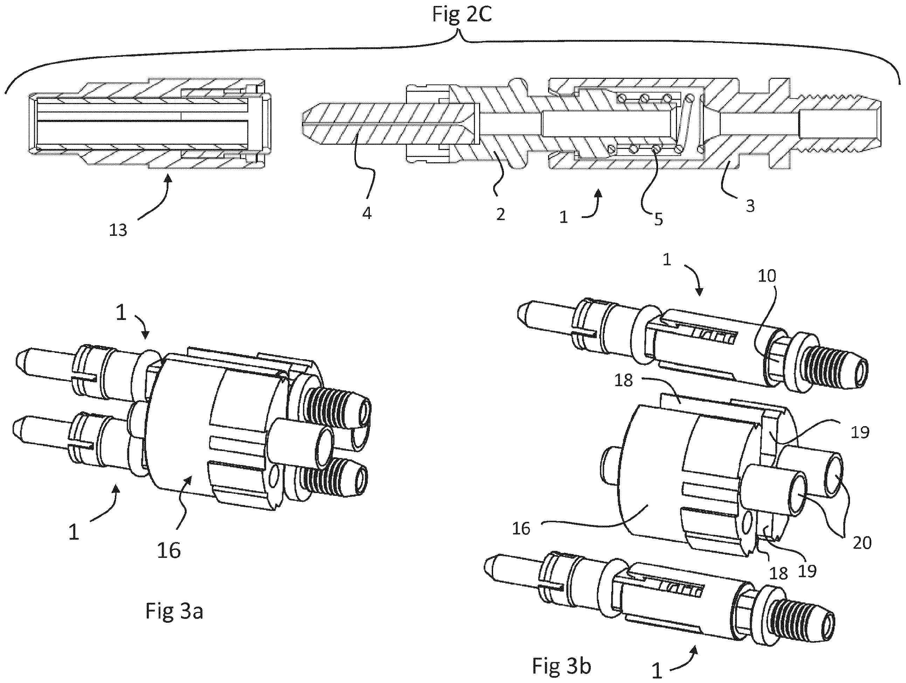

Les figures 2A, 2B et 2C montrent les étapes d'un procédé de couplage de l'élément contacteur 1 selon l'invention avec un tube d'alignement. Sur la figure 2A, l'élément contacteur 1 et le tube d'alignement sont en position prêts à être couplés. Sur la figure 2B, le tube d'alignement est couplé avec l'extrémité avant de la pièce avant de l'élément contacteur 1.

En outre, l'extrémité arrière de la pièce arrière 3 présente une gorge 9 ayant une forme anti-rotation, par exemple dont le fond présente au moins une surface plane 10. Ainsi, l'élément contacteur selon l'invention, lorsqu'il est inséré au sein d'un boitier d'un connecteur conformé pour présenter une protubérance conjuguée avec la gorge 9, peut donc être retenu au sein du boitier aussi bien en translation, par l'intermédiaire de la gorge 9, qu'en rotation, par l'intermédiaire de la surface plane 10 ou autre forme anti-rotation.

L'élément contacteur 1 selon l'invention est donc adapté pour permettre le couplage avec un tube d'alignement. En outre, l'élément contacteur selon l'invention est constitué d'un nombre de pièces minimal, en particulier quatre pièces qui comprennent la pièce avant, la férule, le ressort et la pièce arrière.

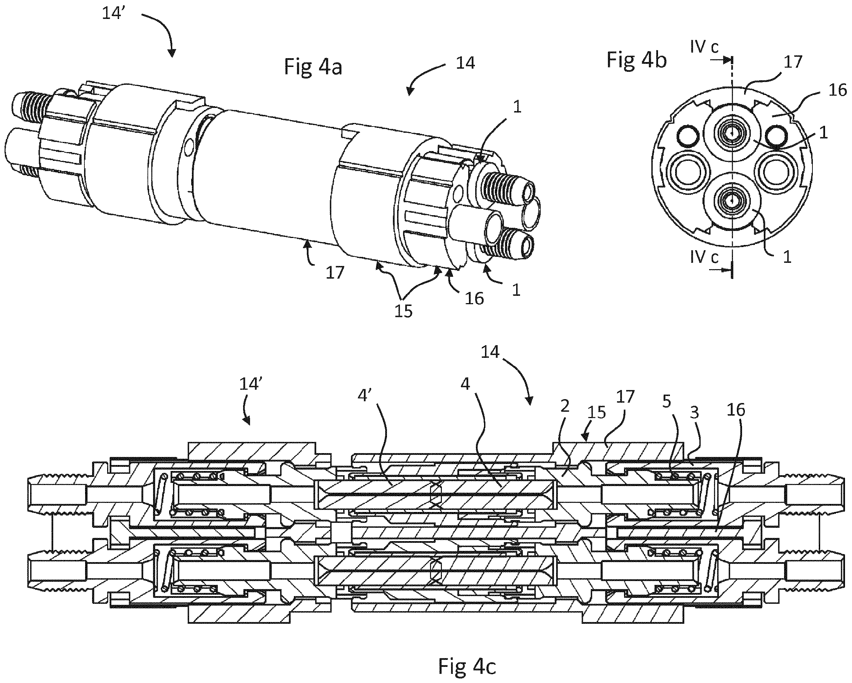

Faisant référence aux figures 3a à 5c, un connecteur 14 comprend un boîtier 15, le tube d'alignement 13, et un ou plusieurs éléments contacteurs 1. Dans l'exemple illustré, le connecteur 14 comprend deux éléments contacteurs 1 pour coupler deux fibres optiques à un connecteur complémentaire 14'. Le connecteur 14 peut comprendre en outre d'autres éléments de connexion, en particulier des bornes électriques de sorte à constituer un connecteur hybride permettant d'effectuer des connexions optique et électrique pour la transmission de signaux optiques et la puissance électrique, ou encore pour la transmission de signaux électriques. Le connecteur peut bien entendu comprendre seulement un, ou plus de deux éléments contacteurs en fonction de l'application et du nombre de fibres optiques à connecter.

Le boîtier 15 comprend un corps de support 16 et une enveloppe 17 dans laquelle le corps de support est monté. Dans l'exemple illustré, le boîtier est donc formé de deux parties assemblées, mais dans des variantes le boîtier peut aussi être formé d'une seule pièce ou de plus de deux pièces assemblées. Les parties de boîtier peuvent être en matériau diélectrique ou en métal en fonction des applications, pour autant qu'il y ait des inserts isolants pour supporter des bornes électriques (lorsqu'il y en a).

Le corps du support est destiné à supporter et positionner les éléments contacteurs 1 et comprend des fentes latérales permettant une insertion latérale des éléments contacteurs 1 dans des logements 18, tel qu'illustré dans les figures 3a et 3b. Des guides anti-rotation 19, par exemple sous forme de rails, coopèrent avec les surfaces planes 10 ou d'autres surfaces anti-rotation des contacteurs afin de bloquer la rotation de ceux-ci lorsqu'ils sont insérés dans le corps de support 16. Les extrémités axiales de la gorge 9 insérée entre les rails du guide anti-rotation 19 permettent aussi de bloquer la position axiale de la pièce arrière 3 de l'élément contacteur 1 par rapport au corps du support 16 et donc au boîtier 15.

Lorsque les éléments contacteurs sont assemblés dans le boîtier 15, la pièce avant 2 de l'élément contacteur peut se déplacer axialement contre l'effort du ressort 5. Comme le tube d'alignement 13 est verrouillé à la pièce avant 2 de l'élément contacteur lorsque le connecteur 14 est couplé à un connecteur 14' complémentaire, la férule 4 avec le tube d'alignement 13 et la pièce avant se déplacent par rapport au boîtier 15 pour absorber un jeu axial et assurer un contact positif de l'extrémité de la férule et de la fibre optique avec la férule et la fibre optique du connecteur complémentaire 14'.

Les connecteurs 14, 14' sont munis d'éléments de verrouillage disposés sur leurs boîtiers respectifs pour verrouiller les connecteurs ensemble lorsqu'ils sont couplés.

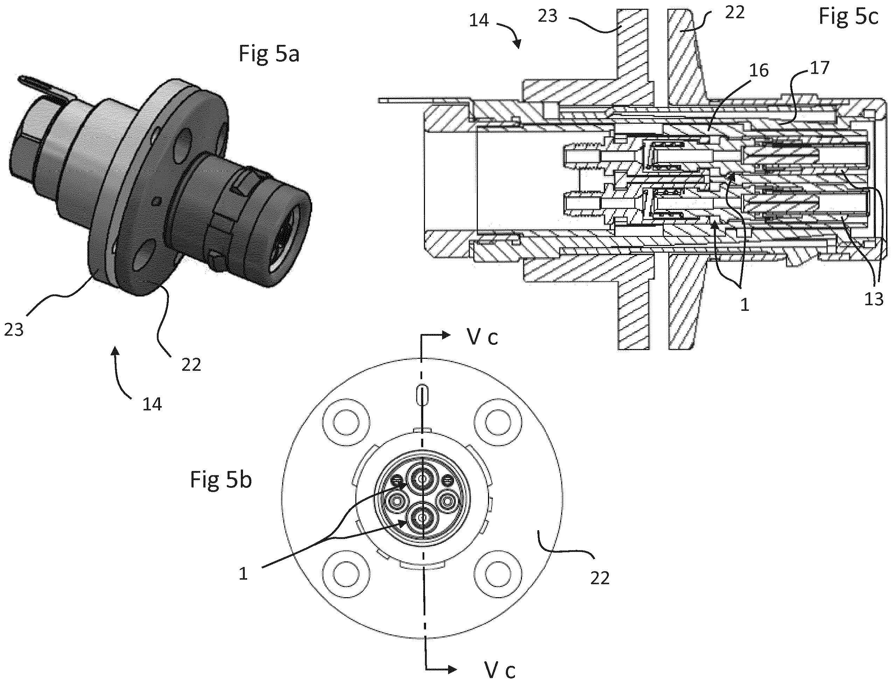

Faisant référence aux figures 5a à 5b, le connecteur 14 peut être configuré pour montage sur un panneau ou autre structure, le connecteur comprenant des brides 22, 23 fixées au boîtier 15 ou faisant partie intégrante du boîtier 15. Une des brides peut être munie d'un filetage coopérant avec un filetage sur le boîtier du connecteur permettant de le serrer contre un élément de panneau pris en sandwich entre les deux brides 22, 23. Les éléments de bride 22, 23 peuvent prendre différentes formes et permettre différents moyens de connexion à une structure de dispositif dans lequel le connecteur est monté.

Avantageusement, l'assemblage du tube d'alignement 13 avec la pièce avant 2 d'un élément contacteur 1 sur laquelle la férule 4 est fixée, combiné avec le couplage par ressort 5 entre les pièces avant 2 et arrière 3 de l'élément contacteur, permet de fournir un élément contacteur et un connecteur pour fibre optique qui est économe à fabriquer et assembler, tout en offrant une connexion fiable, sûre et précise entre fibres optiques. La possibilité d'insérer latéralement les contacteurs optiques 1 dans un corps de support 16 facilite également l'assemblage des fibres optiques dans les contacteurs et ensuite dans un boîtier de connecteur de manière économe et robuste.

### Liste de références

connecteur 14
   boîtier 15
      corps de support 16
         logement 18 pour contacteur
            guide anti-rotation 19
         logement 20 pour borne électrique
      enveloppe 17
      brides 22, 23
   élément contacteur 1
      pièce avant 2
         férule 4
         partie de verrouillage (élastique) 6, 7, 8
            une rainure (ou protubérance) 6
            fentes longitudinales 7
            lèvre 8
         cales 12
      pièce arrière 3
         ressort 5
         griffe 11
         gorge 9
            surface plane 10
         bride 21
      tube d'alignement 13
         surface interne (présente une forme conjuguée à la forme de l'ensemble comprenant la rainure 6 et la lèvre 8) une extrémité creuse

## Revendications

1. Elément contacteur (1) pour un connecteur pour fibre optique, comprenant une pièce avant (2), au sein de laquelle une seule férule (4) est logée et fixée, une pièce arrière (3), au sein de laquelle un ressort (5) est logé, et un tube d'alignement (13), la pièce arrière (3) étant conformée pour permettre le passage en son sein d'une fibre optique, la pièce avant (2) étant fixée de manière amovible à la pièce arrière (3), la pièce avant (2) étant conformée pour s'insérer au moins partiellement au sein de la pièce arrière (3) de sorte à ce que le ressort pousse la pièce avant et la pièce arrière en sens opposés, la pièce avant étant munie d'une partie de verrouillage (6, 7, 8) conformée de sorte à permettre un couplage de position fixe mais séparable avec une extrémité du tube d'alignement (13).

2. Elément contacteur selon la revendication 1, **caractérisé en ce que** ladite partie de verrouillage comprend une rainure ou protubérance (6) s'étendant sur le pourtour de ladite pièce avant (2), interrompue par au moins une fente longitudinale (7).

3. Elément contacteur selon la revendication 2, **caractérisé en ce que** ladite rainure (6) est adjacente à une lèvre (8), ladite lèvre (8) faisant saillie par rapport à ladite rainure (6).

4. Elément contacteur selon l'une des revendications précédentes, **caractérisé en ce que** ladite pièce arrière (3) présente une gorge (9), le fond de ladite gorge (9) présentant au moins une surface anti-rotation (10).

5. Elément contacteur selon l'une des revendications précédentes, **caractérisé en ce que** la pièce avant est au moins partiellement insérée dans la pièce arrière, le ressort étant disposé à l'intérieur de la pièce arrière en compression contre une extrémité arrière de la pièce avant.

6. Elément contacteur selon la revendication 5, **caractérisé en ce que** la pièce arrière comprend au moins une griffe (11) qui coopère avec une cale (12) formée dans la pièce avant (2) pour tenir la pièce avant solidaire de la pièce arrière.

7. Connecteur (14) pour fibre optique, **caractérisé en ce qu'**il comprend un boîtier (15), et au moins un élément contacteur (1) selon l'une des revendications précédentes monté dans le boitier.

8. Connecteur selon la revendication précédente, **caractérisé en ce qu'**il comprend au moins une borne électrique.

9. Connecteur selon l'une des deux revendications précédentes, **caractérisé en ce qu'**il comprend une pluralité desdits éléments contacteurs.

10. Connecteur selon la revendication précédente, **caractérisé en ce que** le boitier comprend un corps de support (16) supportant la pluralité desdits éléments contacteurs et optionnellement des bornes électriques, et une enveloppe (17) assemblée au corps.

11. Connecteur selon la revendication précédente, **caractérisé en ce que** le corps du support (16) comprend des logements (18) supportant et positionnant les éléments contacteurs dans le boitier, chaque logement comprenant une fente latérale permettant une insertion latérale de chaque élément contacteur dans son logement respectif, une guide anti-rotation (19) longeant la fente coopérant avec une surface anti-rotation (10) de l'élément contacteur afin de bloquer la rotation de celui-ci lorsqu'il est inséré dans le corps de support (16).

12. Connecteur selon la revendication précédente, **caractérisé en ce que** le corps du support comprend un rail inséré dans une gorge (9) de la pièce arrière (3) pour bloquer la position axiale de la pièce arrière par rapport au boîtier (15).

## Patentansprüche

1. Kontaktierungselement (1) für einen Steckverbinder für Glasfaser, umfassend ein vorderes Teil (2), in dem eine einzige Hülse (4) untergebracht und befestigt ist, ein hinteres Teil (3), in dem eine Feder (5) untergebracht ist, und ein Ausrichtrohr (13), wobei das hintere Teil (3) ausgebildet ist, um den Durchgang einer Glasfaser durch sein Inneres zu gestatten, wobei das vordere Teil (2) lösbar am hinteren Teil (3) befestigt ist, wobei das vordere Teil (2) ausgebildet ist, um sich mindestens teilweise in das Innere des hinteren Teils (3) derart einzufügen, dass die Feder das vordere Teil und das hintere Teil in entgegengesetzte Richtungen schiebt, wobei das vordere Teil mit einem Verriegelungsabschnitt (6, 7, 8) versehen ist, der derart ausgebildet ist, dass eine Kopplung in fester, aber trennbarer Position mit einem Ende des Ausrichtrohrs (13) gestattet ist.

2. Kontaktierungselement nach Anspruch 1, **dadurch gekennzeichnet, dass** der Verriegelungsabschnitt eine Nut oder einen Vorsprung (6) umfasst, der sich, unterbrochen von mindestens einem Längsschlitz (7), auf dem Umfang des vorderen Teils (2) erstreckt.

3. Kontaktierungselement nach Anspruch 2, **dadurch gekennzeichnet, dass** die Nut (6) zu einer Lippe (8) benachbart ist, wobei die Lippe (8) im Verhältnis zur Nut (6) hervorsteht.

4. Kontaktierungselement nach einem der vorangehenden Ansprüche, **dadurch gekennzeichnet, dass** das hintere Teil (3) eine Vertiefung (9) aufweist, wobei der Boden der Vertiefung (9) mindestens eine Antirotationsoberfläche (10) aufweist.

5. Kontaktierungselement nach einem der vorangehenden Ansprüche, **dadurch gekennzeichnet, dass** das vordere Teil mindestens teilweise in das hintere Teil eingefügt ist, wobei die Feder im Inneren des hinteren Teils gegen ein hinteres Ende des vorderen Teils komprimiert angeordnet ist.

6. Kontaktierungselement nach Anspruch 5, **dadurch gekennzeichnet, dass** das hintere Teil mindestens eine Kralle (11) umfasst, die mit einem im vorderen Teil (2) gebildeten Absatz (12) zusammenwirkt, um das vordere Teil mit dem hinteren Teil fest verbunden zu halten.

7. Steckverbinder (14) für Glasfaser, **dadurch gekennzeichnet, dass** er ein Gehäuse (15) und mindestens ein Kontaktierungselement (1) nach einem der vorangehenden Ansprüche umfasst, das in dem Gehäuse angebracht ist.

8. Steckverbinder nach vorangehendem Anspruch, **dadurch gekennzeichnet, dass** er mindestens einen elektrischen Anschluss umfasst.

9. Steckverbinder nach einem der zwei vorangehenden Ansprüche, **dadurch gekennzeichnet, dass** er eine Vielzahl der Kontaktierungselemente umfasst.

10. Steckverbinder nach vorangehendem Anspruch, **dadurch gekennzeichnet, dass** das Gehäuse einen Tragkörper (16) umfasst, der die Vielzahl der Kontaktierungselemente trägt und optional elektrische Anschlüsse und einen mit dem Körper verbundenen Mantel (17).

11. Steckverbinder nach vorangehendem Anspruch, **dadurch gekennzeichnet, dass** der Tragkörper (16) Aufnahmen (18) umfasst, die die Kontaktierungselemente im Gehäuse stützen und positionieren, wobei jede Aufnahme einen seitlichen Schlitz umfasst, der ein seitliches Einfügen jedes Kontaktierungselements in seine jeweilige Aufnahme erlaubt, wobei eine Antirotationsführung (19), die den Schlitz aufnimmt, mit einer Antirotationsoberfläche (10) des Kontaktierungselements zusammenwirkt, um die Rotation desselben zu blockieren, wenn es in den Stützkörper (16) eingefügt ist.

12. Steckverbinder nach vorangehendem Anspruch, **dadurch gekennzeichnet, dass** der Tragkörper eine Schiene umfasst, die in eine Vertiefung (9) des hinteren Teils (3) eingefügt ist, um die axiale Position des hinteren Teils im Verhältnis zum Gehäuse (15) zu blockieren.

## Claims

1. A contactor element (1) for an optical fiber connector, comprising a front part (2) within which a single ferrule (4) is housed and fixed, a rear part (3) within which a spring (5) is housed, and an alignment tube (13), the rear part (3) being shaped to allow the passage therein of an optical fiber, the front part (2) being removably fixed to the rear part (3), the front part (2) being shaped to fit at least partially within the rear part (3) so that the spring pushes the front part and the rear part in opposite directions, the front part being provided with a locking portion (6, 7, 8) shaped so as to allow a fixed but separable positional coupling with one end of the alignment tube (13).

2. The contactor element according to claim 1, **characterized in that** said locking portion comprises a groove or protuberance (6) extending around the periphery of said front part (2), interrupted by at least one longitudinal slot (7) .

3. The contactor element according to claim 2, **characterized in that** said groove (6) is adjacent to a lip (8), said lip (8) protruding with respect to said groove (6).

4. The contactor element according to any of the preceding claims, **characterized in that** said rear part (3) has a recess (9), the bottom of said recess (9) having at least one anti-rotation surface (10).

5. The contactor element according to any of the preceding claims, **characterized in that** the front part is at least partially inserted into the rear part, the spring being disposed inside the rear part in compression against a rear end of the front part.

6. The contactor element according to claim 5, **characterized in that** the rear part comprises at least one claw (11) which cooperates with a wedge (12) formed in the front part (2) to hold the front part secured to the rear part.

7. The optical fiber contactor (14), **characterized in that** it comprises a casing (15), and at least one contactor element (1) according to any of the preceding claims mounted in the casing.

8. The contactor according to the preceding claim, **characterized in that** it comprises at least one electrical terminal.

9. The contactor according to one of the two preceding claims, **characterized in that** it comprises a plurality of said contactor elements.

10. The contactor according to the preceding claim, **characterized in that** the casing comprises a support body (16) supporting the plurality of said contactor elements and optionally electrical terminals, and a shell (17) assembled to the body.

11. The contactor according to the preceding claim, **characterized in that** the body of the support (16) comprises housings (18) supporting and positioning the contactor elements in the casing, each housing comprising a lateral slot allowing lateral insertion of each contactor element in its respective housing, an anti-rotation guide (19) housing the slot cooperating with an anti-rotation surface (10) of the contactor element in order to block the rotation of the latter when it is inserted into the support body (16).

12. The contactor according to the preceding claim, **characterized in that** the support body comprises a rail inserted into a recess (9) of the rear part (3) to block the axial position of the rear part relative to the casing (15).
